# EUROPÄISCHE PATENTSCHRIFT

(11) **EP 3 774 174 B1**
(45) Veröffentlichungstag und Bekanntmachung des Hinweises auf die Patenterteilung: **24.12.2025**
(21) Anmeldenummer: 19721546.0
(22) Anmeldetag: 12.04.2019
(51) Int. Cl.: B23Q 11/00

(54) **ABSAUGVORRICHTUNG MIT SCHAUFELN SOWIE HIERFÜR VORGESEHENES HERSTELLUNGSVERFAHREN**
SUCTION DEVICE HAVING BLADES, AND METHOD FOR THE PRODUCTION THEREOF
DISPOSITIF D'ASPIRATION À AUBES AINSI QUE PROCÉDÉ DE FABRICATION ASSOCIÉ

(30) Priorität: 12.04.2018 DE 102018108762
(43) Veröffentlichungstag der Anmeldung: 17.02.2021
(73) Patentinhaber: Gühring KG, 72458 Albstadt (DE)
(72) Erfinder: GAUGGEL, Christian, 72469 Heinstetten (DE); CHETREANU-DON, Camil Octav, 400698 Cluj-Napoca (RO); KLEINER, Gilbert, 72514 Inzigkofen (DE)
(74) Vertreter: Winter, Brandl - Partnerschaft mbB
(86) Internationale Anmeldenummer: PCT/EP2019/059454
(87) Internationale Veröffentlichungsnummer: WO 2019/197625

(56) Entgegenhaltungen:
- EP-A2- 3 100 821
- US-A- 1 990 991
- US-A- 5 074 044
- US-A1- 2014 020 919

## Beschreibung

### Technisches Gebiet

Die Erfindung betrifft eine Absaugvorrichtung zum Ansaugen von bei einer Schneidbearbeitung eines Werkstücks entstehenden Spänen und/oder Staub insbesondere für ein Spannfutter zum Aufnehmen eines drehangetriebenen Schneidwerkzeugs, insbesondere eines Schneidwerkzeugs zum Bearbeiten von CFK-Werkstoffen oder anderen kurzspanenden Werkstoffen. Weiterhin betrifft die Erfindung ein Verfahren zur Herstellung einer solchen Absaugvorrichtung.

Insbesondere bei der Bearbeitung von CFK-Werkstoffen oder anderen kurzspanenden Werkstoffen entstehen bei der spanenden Bearbeitung, also beim Abtrennen von Fasern des (CFK-)Werkstoffs, feine Späne, die sich an dem Werkzeug und an dem zu bearbeitenden Werkstück anlagern und somit das Bearbeitungsergebnis verschlechtern. Um dies zu vermeiden werden oftmals aus dem Stand der Technik bekannte Absaugvorrichtungen eingesetzt, um die entstehenden Späne und/oder den Staub zu entfernen.

Unter anderem offenbart dazu die DE 37 34 127 A1 eine Maschine zur spanenden Bearbeitung, wobei eine Absaugeinrichtung für die abgenommenen Späne vorhanden ist, die einen Spänefangraum aufweist, der mit einer Absaugpumpe verbunden ist. Dabei ist der Spänefangraum von einer Begrenzungswand umgeben, dessen zum Werkstück weisender Rand eine Durchtrittsöffnung für das Werkzeug begrenzt und gleichzeitig in Axialrichtung verschiebbar auf der Werkstück-Oberfläche auflegbar ist. Bei einer derartigen Absaugeinrichtung wird jedoch ein unzureichendes Absaugergebnis erzielt, da die Saugleistung zu gering ist und nur an einzelnen Einströmöffnungen die Absaugpumpe angeschlossen ist.

Weiter offenbart die EP 3 100 821 A2 eine Absaugvorrichtung mit den Merkmalen des Oberbegriffs des Patentanspruchs 1, nämlich eine Reinigungsturbine mit einer Glocke und einer Vielzahl von Schlitzen, die über den Umfang der Glocke angeordnet sind und sich als Durchgangslöcher in Radialrichtung durch die Glocke hindurch erstrecken.

Zudem offenbart die US 2014/020919 A1 ein Rotationswerkzeug mit einem als Spannzange ausgebildeten Spannfutter zur Aufnahme eines Werkzeugs, das einen Ventilator-Mechanismus mit einer Vielzahl von Schaufelblättern aufweist, welcher dazu dient, Luft nach vorne, d.h. zum Werkstück hin zu führen/blasen.

Auch ist aus EP 2 422 925 B1 eine Abführeinrichtung zum Abführen von Partikeln an einem Bearbeitungsmittel bekannt, wobei ein Flügelrad eingesetzt wird, um eine Luftströmung zum Abführen von bei der Bearbeitung entstehenden Partikeln zu erzeugen. Das Flügelrad ist dabei so an dem Bearbeitungsmittel anbringbar, dass es mit dem Bearbeitungsmittel um dessen Bearbeitungsachse rotiert. Zusätzlich ist ein Abscheider dem Flügelrad vorgeschaltet, um die Partikel aus dem Luftstrom vor dem Flügelrad abzuscheiden. Es hat sich jedoch gezeigt, dass die damit erzielbare Saugleistung aufgrund schlecht beherrschbarer Unwuchtkräfte relativ begrenzt ist.

Außerdem offenbart die EP 2 644 318 A1 eine Werkzeugaufnahme, ein Werkzeug und eine Absaugeinrichtung, die zusammen mit dem Werkzeug rotiert und ausgelegt ist, um Späne, die bei einer Schneidbearbeitung eines Werkstücks entstehen, zu entfernen, wobei die Absaugeinrichtung lösbar mit der Werkzeugaufnahme verbunden ist und einen glockenförmigen Körper enthält, der eine Absaugkammer um das Werkzeug bildet und eine Vielzahl an Öffnungen in seiner Seitenwand aufweist.

Abgesehen davon, dass das Handling dieser Absaugvorrichtung und die Montage der dazu erforderlichen Komponenten aufwändig und gleichzeitig fehleranfällig ist, zeigt sich auch bei dieser bekannten Einrichtung, dass mit ihr die bei der modernen Hochleistungsbearbeitung von CFK-Materialien erforderliche Saugleistung nicht erreicht werden kann.

Es ist also die Aufgabe der Erfindung, die Nachteile aus dem Stand der Technik zu vermeiden oder zu verringern. Insbesondere soll eine Absaugvorrichtung für ein Spannfutter bereitgestellt werden, die sich bei einfacher Herstellbarkeit und Montage durch eine bislang bei Weitem nicht erreichte Saugleistung auszeichnet. Außerdem soll ein wirtschaftliches Herstellungsverfahren für eine solche Absaugvorrichtung entwickelt werden.

Die Aufgabe der Erfindung wird durch eine Absaugvorrichtung mit den Merkmalen des Patentanspruchs 1 und ein Verfahren zur Herstellung einer Absaugvorrichtung mit den Merkmalen des Patentanspruchs 11 gelöst. Vorteilhafte Weiterbildungen sind Gegenstand der Unteransprüche.

Mit anderen Worten erstreckt sich eine jeweilige Schaufeleintrittskante bzw. Schaufelinnenkante von einem radial innen am Nabenabschnitt gelegenen Ende der Schaufel in Radialrichtung nach außen und in Axialrichtung von dem Nabenabschnitt weg, d.h. beispielsweise in Richtung zu einem Werkstück hin bzw. zu einem werkzeugseitigen Ende der Absaugvorrichtung hin, bis zu dem Ringabschnitt. Somit wird ein sich in Axialrichtung erstreckender, koaxial zu dem Nabenabschnitt angeordneter, beispielsweise glockenförmiger Abschnitt ausgebildet, von dem sich die Vielzahl an Radialschaufeln radial nach innen erstreckt. Dieses Konzept führt dazu, dass die Schaufeleintrittskanten der Radialschaufeln jeweils so ausgebildet und angeordnet sind, dass ein radialer Abstand zwischen einer Längsachse der Absaugvorrichtung und der jeweiligen Schaufeleintrittskante zum werkzeugseitigen Ende, d.h. zu einem ringabschnittseitigen Ende, der Absaugvorrichtung zunehmend größer wird.

Bei der Absaugvorrichtung bilden die Schaufeln und der Ringabschnitt ein Schaufelrad mit einer werkzeugseitigen, durchgehend ringförmigen Saugöffnung und einer Vielzahl von umfangsseitigen Auslassöffnungen bilden, wobei die Auslassöffnungen auf einem radialen Außenumfang des Schaufelrads ausgebildeten Austrittsöffnungen von Schaufelkanälen entsprechen.

Dies hat den Vorteil, dass stromauf der Schaufeln nicht nur eine verhältnismäßig große Ansaugöffnung im Bereich des Ringabschnitts ausgebildet wird, sondern auch ein vergrößertes Saugvolumen, wodurch es gelingt, die Saugleistung der Schaufeln auf ein bislang nicht erreichtes Niveau zu heben. Damit eignet sich die Absaugvorrichtung in besonderer Weise zum Ansaugen von Spänen und/oder Staub auch dann, wenn extrem viele und kleine Späne oder Staubpartikel anfallen, wie das beispielsweise bei der Hochleistungsbearbeitung von CFK-Materialien der Fall ist. In Versuchen konnte gezeigt werden, dass selbst ein bei dieser Bearbeitung entstehender Spänestrahl sicher vom Laufrad eingefangen und von der Werkstückoberfläche weg transportiert werden kann.

Dies hat wiederum den Vorteil, dass keine die Schaufeln umgebende Saugkammer vorhanden sein muss, da auch bei Anordnung in einem Werkzeugmaschinenbearbeitungsraum ohne Saugkammer die Späne und/oder der Staub zuverlässig wegtransportiert werden. Dadurch wird ein Werkzeugwechsel während der Bearbeitung erheblich erleichtert, da die Absaugvorrichtung und damit auch ein Spannabschnitt zum Aufnehmen eines Werkzeugs frei zugänglich sind.

Zudem ist es zweckmäßig, wenn ein Außendurchmesser des Nabenabschnitts, des Ringabschnitts und/oder der Schaufeln einen gemeinsamen Hüllzylinder bilden, dessen Mantelfläche die Absaugvorrichtung umschließt. So kann eine besonders kompakte und dadurch vielseitig einsetzbare Absaugvorrichtung bereitgestellt werden, wobei sich gezeigt hat, dass diese Gestaltung eine erhebliche Anhebung der zulässigen Drehzahl erlaubt.

Auch ist es bevorzugt, wenn der Außendurchmesser des Nabenabschnitts, des Ringabschnitts und/oder der Schaufeln eine gemeinsame rotationssymmetrische Hüllfläche bilden, dessen Mantelfläche die Absaugvorrichtung umschließt. Vorzugsweise verjüngt sich der Hüllkonus in Axialrichtung von dem Ringabschnitt in Richtung zu dem Nabenabschnitt hin. Dadurch kann eine vergrößerte Schaufelfläche zugleich mit einer großen Ansaugöffnung ausgebildet werden, so dass die Saugleistung zusätzlich erhöht werden kann. Die Hüllfläche kann verschiedenste Formen annehmen, um auf die jeweils erforderliche Saugleistung Einfluss zu nehmen. In der einfachsten Gestaltung wird sie von einem Hüllzylinder gebildet, wodurch die Masse der Absaugvorrichtung klein bleibt, so dass selbst bei sehr hohen Drehzahlen die dynamischen Kräfte beherrschbar sind. Die Hüllfläche kann auch von einem Hüllkonus gebildet sein, der sich in Axialrichtung von dem Ringabschnitt in Richtung zu dem Nabenabschnitt hin verjüngt. Dadurch kann eine vergrößerte Schaufelfläche zugleich mit einer großen Ansaugöffnung ausgebildet werden, so dass die Saugleistung zusätzlich erhöht werden kann.

Außerdem ist es von Vorteil, wenn die Schaufeln in Axialrichtung und/oder in Radialrichtung und/oder in Umfangsrichtung angestellt sind. Bevorzugt ist es, wenn die jeweiligen Längsachsen der Schaufeln zu einer Längsachse der Absaugvorrichtung beispielsweise in Umfangsrichtung zur Axialrichtung, vorzugsweise um mindestens 10°, weiter bevorzugt um 15° bis 35°, geneigt sind. Dadurch ist es in vorteilhafter Weise möglich, die Schaufelfläche und insbesondere eine Schaufelwirkkantenlänge bei gleichbleibender axialen Erstreckung zu vergrößern.

Auch ist es bevorzugt, wenn die jeweiligen Längsachsen der Schaufeln zu einer Längsachse der Absaugvorrichtung in Radialrichtung, vorzugsweise um mindestens 15°, weiter bevorzugt um 20 bis 30°, geneigt sind. Dabei entspricht die Längsachse der Absaugvorrichtung einer Längsachse des Nabenabschnitts bzw. des Ringabschnitts. Dadurch kann in vorteilhafter Weise die Saugströmung zum Ansaugen der Späne und/oder des Staubs erzeugt und in eine vorbestimmte Richtung ausgerichtet werden.

Ferner zeichnet sich eine bevorzugte Weiterbildung dadurch aus, dass die jeweiligen Schaufeln eine positive Krümmung, vorzugsweise eine durchgängig positive Krümmung, aufweisen. So kann die Drehrichtung des Nabenabschnitts besonders effektiv zur Erzeugung einer möglichst großen Saugströmung bzw. Saugleistung genutzt werden. Alternativ ist es auch möglich, dass die Schaufeln eine negative Krümmung besitzen.

Insbesondere ist es bevorzugt, wenn die Schaufeln in Umfangsrichtung und/oder in Längsachsenrichtung gekrümmt sind. So lässt sich eine besonders vorteilhafte Ausgestaltung der Schaufeln zur Erzeugung einer Saugströmung mit einer Strömungsgeschwindigkeit von bis zu 20 m/s erzielen.

Zusätzlich ist es von Vorteil, wenn die Schaufeln einen kontinuierlich verlaufenden Schaufelquerschnitt über mehr als die Hälfte der Erstreckungslänge der Absaugvorrichtung entlang ihrer Längsachse besitzen. Dadurch kann eine große nutzbare Schaufelfläche zum Erzeugen einer Ansaugströmung genutzt werden. So wird in vorteilhafter Weise ermöglicht, bei einer hohen Saugleistung axial möglichst kurz zu bauen, da ein verhältnismäßig großer Teil der Erstreckungslänge der Absaugvorrichtung für eine nutzbare Schaufellänge verwendet werden kann. D.h. also, dass ein möglichst großer Teil der vorhandenen Erstreckungslänge der Schaufeln zur Erzeugung der Ansaugströmung genutzt wird.

Gemäß einer vorteilhaften Weiterbildung ist die Absaugvorrichtung in sich integral, d.h. werkstoffeinstückig, ausgebildet. Dadurch können beispielsweise die Schaufeln der Absaugvorrichtung bereits beim Herstellen präzise zueinander und/oder zu dem Nabenabschnitt ausgerichtet werden. Die Toleranzen sind daher nicht abhängig von einer Montagegenauigkeit. Außerdem kann die Absaugvorrichtung dadurch als Ganzes einfach montiert werden, was sich günstig auf die Herstellungskosten und die Montagezeit auswirkt.

Vorstehend wurde aufgezeigt, dass sich die Absaugvorrichtung dadurch auszeichnet, dass sie aufgrund einer besonderen Schaufelanordnung und -geometrie eine bislang nicht erreichte Saugleistung erreicht. Die Schaufelanordnung und - geometrie kann auf besonders wirtschaftliche Weise optimiert werden, wenn die Absaugvorrichtung generativ, d.h. additiv bzw. in einem generativen Herstellungsverfahren, gefertigt ist. Vorteilhafterweise ist durch die generative Herstellung eine hochpräzise Ausbildung komplexer Geometrien, beispielsweise der Schaufeln, möglich.

Außerdem ist es zweckmäßig, wenn die Absaugvorrichtung, ein Spannabschnitt des Spannfutters zum Aufnehmen eines drehangetriebenen Schneidwerkzeugs und ein Schaftabschnitt des Spannfutters einen modularen Aufbau bilden, so dass die Absaugvorrichtung vorteilhafterweise auch unabhängig von dem Spannabschnitt und dem Schaftabschnitt eingesetzt werden kann.

Gemäß einer besonders vorteilhaften Weiterbildung ist der Nabenabschnitt bzw. die Absaugvorrichtung integral mit dem Spannabschnitt des Spannfutters zum Aufnehmen eines drehangetriebenen Schneidwerkzeugs ausgebildet. Dadurch kann eine hochpräzise Zentrierung des Nabenabschnitts und damit auch der Schaufeln zu dem Spannabschnitt sichergestellt werden, so dass unwuchtbedingte Kräfte bei reduziertem montagetechnischem Aufwand leicht beherrschbar bleiben. So kann ein besonders ruhiger Lauf der Absaugvorrichtung auch bei extrem hohen Drehzahlen gewährleistet werden, wobei gleichzeitig herkömmlich auftretende Montagefehler ausgeschlossen werden. Mit anderen Worten sind der Nabenabschnitt, der Spannabschnitt sowie die Schaufeln und der Ringabschnitt integral zusammen generativ gefertigt. Eine Einheit aus dem Nabenabschnitt, den Schaufeln und dem Ringabschnitt wird nachfolgend auch als ein Käfig bezeichnet. Dadurch kann die Absaugvorrichtung in einem Herstellungsverfahren, beispielsweise durch 3D-Druck, hergestellt werden, so dass eine zeitaufwändige und kostenintensive Nachbearbeitung und/oder Montage entfallen kann.

Weiterhin ist es vorteilhaft, wenn die Absaugvorrichtung an einem Schaftabschnitt, beispielsweise einem Hohlschaftkegel, des Spannfutters befestigt ist. Besonders bevorzugt ist es, wenn der Hohlschaftkegel konventionell gefertigt ist und die Absaugvorrichtung beispielsweise durch den 3D-Druck auf den Schaftabschnitt aufgedruckt ist. Damit wird das Spannfutter in einer Hybridbauweise gefertigt, so dass die generativ hergestellte Absaugvorrichtung mit dem vorzugsweise als Standardbauteil ausgebildetem Schaftabschnitt kombiniert werden kann. So lassen sich die Vorteile der generativen Fertigung mit den Vorteilen einer konventionellen Fertigung verbinden, dass die Herstellungskosten erheblich reduziert werden können.

Insbesondere ist es bevorzugt, wenn die Absaugvorrichtung durch selektives Laserschmelzen ("Selective Laser Melting") hergestellt ist. Dabei wird der zu verarbeitende Werkstoff in Pulverform in einer dünnen Schicht auf einer Grundplatte aufgebracht und mittels Laserstrahlung lokal vollständig aufgeschmolzen bzw. umgeschmolzen. Nach der Erstarrung wird somit eine feste Materialschicht ausgebildet. Anschließend wird die Grundplatte um den Betrag der Dicke der aufgetragenen Schicht abgesenkt und erneut Pulver aufgetragen, bis alle Schichten umgeschmolzen sind.

Zudem ist es von Vorteil, wenn die Absaugvorrichtung vorzugsweise schichtweise von einem nabenabschnittseitigen Ende zu einem ringabschnittseitigen Ende hin gefertigt ist. Somit lässt sich insbesondere an einem nabenabschnittseitigen Ende die Geometrie einer optimalen Schaufelform herstellen.

Zusätzlich ist es bevorzugt, wenn in dem Nabenabschnitt zumindest ein Kanal ausgebildet ist, wodurch vorteilhafterweise Material innerhalb des Nabenabschnitts eingespart wird und somit die Herstellungszeit, insbesondere 3D-Druckzeit, verringert wird. Zudem ist es vorteilhaft, wenn der Kanal C-förmig im Querschnitt ausgebildet ist und vorzugsweise konzentrisch zu der Längsachse der Absaugvorrichtung gebogen. Gemäß einer vorteilhaften Weiterbildung sind mehrere Kanäle vorhanden, die vorzugsweise radial geschachtelt angeordnet sind. Das heißt, dass, beispielsweise bei drei Kanälen, ein erster Kanal kreisbogenförmig auf einem zu der Längsachse konzentrischen ersten Kreis ausgebildet ist, ein zweiter Kanal kreisbogenförmig auf einem zu der Längsachse konzentrischen zweiten Kreis ausgebildet ist, wobei der zweite Kreis einen größeren Radius als der erste Kreis besitzt, und ein dritter Kanal kreisbogenförmig auf einem zu der Längsachse konzentrischen dritten Kreis ausgebildet ist, wobei der dritte Kreis einen größeren Radius als der zweite Kreis besitzt. Die Kanäle werden hergestellt, indem das Pulver im Bereich der Kanäle während der Herstellung nicht aufgeschmolzen wird. Das Pulver verbleibt in den Kanälen, da es sich zusätzlich günstig auf die Dämpfungseigenschaften auswirkt.

Außerdem ist es zweckmäßig, wenn eine im Querschnitt, vorzugsweise kreisbogenförmig, vorzugsweise zu der Längsachse konzentrisch, ausgebildete Kammer in dem Nabenabschnitt ausgebildet ist. Dadurch kann vorteilhafterweise zum einen zu druckendes Material eingespart werden, so dass die Herstellungszeit zusätzlich verkürzt wird, und zum anderen die Kammer als eine Vorwuchtkammer bzw. Wuchtungskammer dienen, so dass unwuchtbedingte Kräfte reduziert werden können. Bei der Herstellung wird das Pulver im Bereich der Vorwuchtkammer nicht aufgeschmolzen und anschließend durch eine sich in Radialrichtung erstreckende Durchgangsöffnung aus der Absaugvorrichtung entfernt.

Besonders bevorzugt ist es dabei, wenn der Spannabschnitt so ausgebildet ist, dass die Schaufeln sowie Eintritts- und Austrittsöffnungen von Schaufelkanälen, die jeweils zwischen benachbarten Schaufeln ausgebildet sind, um den Spannabschnitt herum liegen. So wird ermöglicht, dass die durch ein im Spannabschnitt aufgenommenes Schneidwerkzeug entstehenden Späne und/oder Staubpartikel durch die Schaufelkanäle radial nach außen von dem Schneidwerkzeug und damit von dem zu bearbeitenden Werkstück weg geführt werden.

Außerdem ist es von Vorteil, wenn sich der vorzugsweise kegelstumpfartig ausgebildete ausgebildete oder parabelstumpfartig ausgebildete Spannabschnitt in Axialrichtung zu einem distalen Ende, d.h. einem werkzeugseitigen Ende bzw. einem ringabschnittseitigen Ende, der Absaugvorrichtung hin verjüngt. Bevorzugterweise bildet eine radiale Außenumfangsfläche des Spannabschnitts zu der Längsachse der Absaugvorrichtung einen Winkel von maximal 10°, bevorzugt maximal 5°, weiter bevorzugt 2 bis 4°, aus. Dadurch werden geeignete Umströmungseigenschaften des Spannabschnitts zur Maximierung der Ansaugströmung bzw. Saugleistung erzeugt.

Zudem ist es zweckmäßig, wenn der Spannabschnitt axial bündig mit dem Ringabschnitt abschließt. Mit anderen Worten ist es bevorzugt, wenn sich der Abschnitt von dem Nabenabschnitt zu dem Ringabschnitt in Axialrichtung zumindest über die Hälfte der Erstreckungslänge in Axialrichtung, vorzugsweise über mindestens 90% der Erstreckungslänge, weiter bevorzugt über die gesamte Erstreckungslänge, der Absaugvorrichtung erstrecken. Dadurch wird in geeigneter Weise die Erstreckungslänge der Absaugvorrichtung optimal ausgenutzt.

Auch ist es vorteilhaft, wenn der Spannabschnitt einen Hydrodehnspannbereich oder einen Spannzangenmechanismus aufweist. So wird in vorteilhafter Weise gewährleistet, dass ein in dem Spannabschnitt aufzunehmendes Schneidwerkzeug exakt zentriert eingespannt werden kann. Dadurch wird vermieden, dass eine Dezentrierung bzw. ein Achsversatz und eine daraus resultierende Unwucht entstehen.

Gemäß einer vorteilhaften Weiterbildung kann sich der Anstellwinkel der Schaufeln in radialer und/oder axialer Richtung über die Schaufelerstreckung ändern.

Zudem ist es vorteilhaft, wenn die Schaufeln und der Ringabschnitt ein Schaufelrad mit der werkzeugseitigen, durchgehend ringförmigen Saugöffnung, d.h. mit einem durchgehenden Ringquerschnitt, und einer Vielzahl von umfangsseitigen Auslassöffnungen bilden. Dabei entsprechen die Auslassöffnungen den Austrittsöffnungen der Schaufelkanäle, welche auf dem radialen Außenumfang des Schaufelrads ausgebildet sind. Insbesondere ist es bevorzugt, wenn sich die Schaufelkanäle von dem Nabenabschnitt aus bis zu dem Ringabschnitt hin erstrecken.

Außerdem ist es bevorzugt, wenn die Längskanten der Austrittsöffnungen im Wesentlichen parallel zueinander ausgerichtet sind. Die Austrittsöffnungen erstrecken sich dabei im Wesentlichen senkrecht zu einer Radialrichtung der Absaugvorrichtung, so dass ein (Weg-)Führen der Späne in Radialrichtung nach außen ermöglicht ist.

Ferner ist es vorteilhaft, wenn die Absaugvorrichtung in einem Werkzeugmaschinenbearbeitungsraum angeordnet ist, in dem eine Spulströmung erzeugt ist, um die Späne und/oder den Staub aus dem Werkzeugmaschinenbearbeitungsraum zu entfernen. In einer bevorzugten Weiterbildung ist die Spülströmung als eine Querströmung in dem Werkzeugmaschinenbearbeitungsraum ausgebildet, die senkrecht zu der Längsachse der Absaugvorrichtung ausgerichtet ist.

Die Erfindung betrifft auch ein Spannfutter für drehangetriebene Schneidwerkezuge, mit einem Schaftabschnitt, einem Spannabschnitt zum kraftschlüssigen Spannen eines drehangetriebenen Schneidwerkzeugs und einer am Spannabschnitt drehfest angeordneten, erfindungsgemäßen Absaugvorrichtung zum Ansaugen von bei einer Schneidbearbeitung eines Werkstücks entstehenden Spänen und/oder Staub.

Die Aufgabe der Erfindung wird auch durch ein Verfahren zur Herstellung einer erfindungsgemäßen Absaugvorrichtung, insbesondere für ein Spannfutter, gelöst, wobei das Verfahren folgende Schritte aufweist: Bestimmen einer für den Absaugvorgang von einem Eingriffsbereich eines Schneidwerkzeugs erforderlichen Saugleistung hinsichtlich Geschwindigkeit und Volumen; Erstellen eines Berechnungsmodells für die Gestaltung einer Vielzahl von Schaufeln der Absaugvorrichtung; Optimieren der Schaufelgestaltung in dem Berechnungsmodell hinsichtlich einer erzeugten Saugleistung; und additives Fertigen des Berechnungsmodells.

Dies hat den Vorteil, dass je nach Einsatzgebiet der Absaugvorrichtung die Schaufeln so ausgestaltet werden können, dass die Saugleistung für das entsprechende Einsatzgebiet optimiert ist. Durch das additive Fertigen der Absaugvorrichtung lassen sich komplexe Geometrien herstellen, die einem hinsichtlich einer zu erzeugenden Saugleistung optimierten Berechnungsmodell der Absaugvorrichtung, insbesondere der Schaufeln, entsprechen.

### Kurzbeschreibung der Figuren

Die Erfindung wird nachfolgend mit Hilfe von Zeichnungen erläutert. Es zeigen:
Fig. 1 eine Halblängsschnittansicht einer erfindungsgemäßen Absaugvorrichtung, die an einem Schaftabschnitt angebracht ist,
Fig. 2 eine Längsschnittansicht der Absaugvorrichtung und des Schaftabschnitts entlang der Linie II-II,
Fig. 3 eine Querschnittsansicht eines Nabenabschnitts der Absaugvorrichtung entlang der in Fig. 1 dargestellten Linie III-III,
Fig. 4 eine Frontansicht der Absaugvorrichtung,
Fig. 5 eine Längsschnittansicht der Absaugvorrichtung entlang der in Fig. 4 dargestellten Linie IV-IV,
Fig. 6 eine Längsschnittansicht der Absaugvorrichtung entlang der in Fig. 4 dargestellten Linie VI-VI,
Fig. 7 eine perspektivische Seitenansicht der Absaugvorrichtung mit dem Schaftabschnitt,
Fig. 8 eine perspektivische Frontansicht der Absaugvorrichtung,
Fig. 9 eine perspektivische Ansicht schräg von vorne der Absaugvorrichtung, und
Fig. 10 eine schematische, perspektivische Ansicht schräg von oben der Absaugvorrichtung.

### Beschreibung der Ausführungsbeispiele

Die Figuren sind lediglich schematischer Natur und dienen ausschließlich dem Verständnis der Erfindung. Die gleichen Elemente sind mit denselben Bezugszeichen gekennzeichnet.

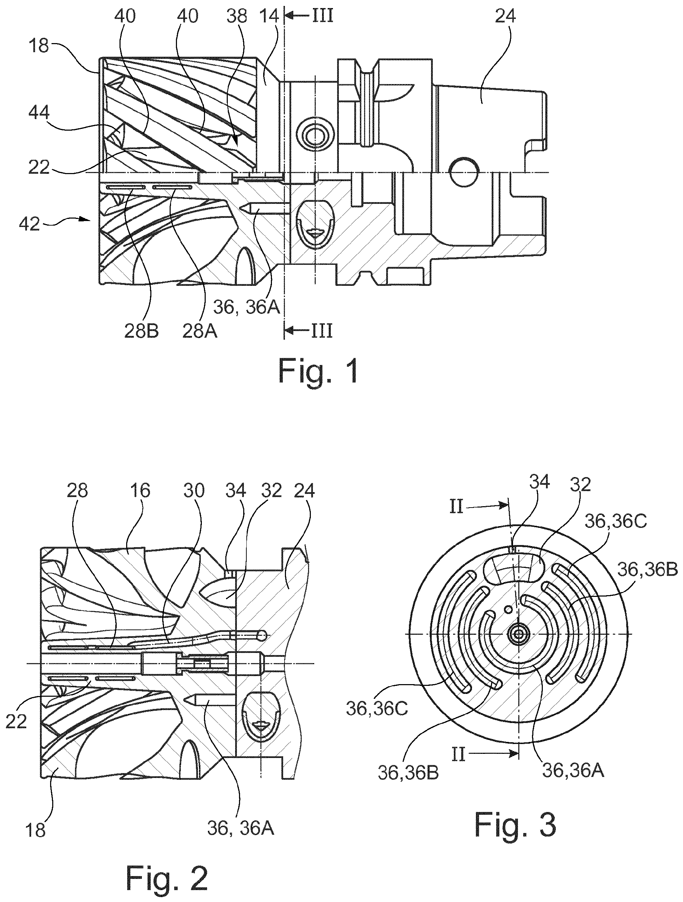

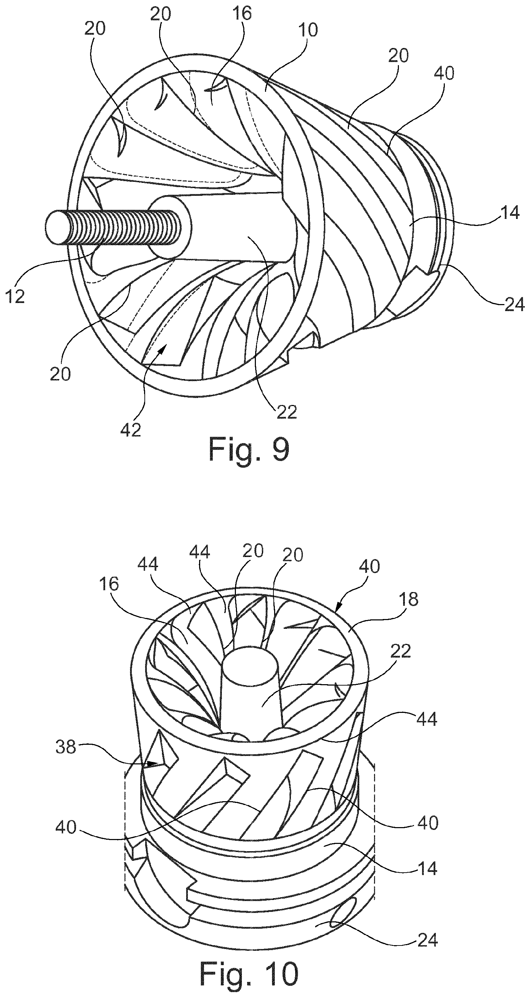

Fign. 1 bis 10 zeigen eine erfindungsgemäße Absaugvorrichtung, die Teil eines Spannfutters 10 ist. In dem Spannfutter 10 kann ein Schneidwerkzeug 12 aufgenommen werden. Die Absaugvorrichtung weist einen drehantreibbaren Nabenabschnitt 14 auf. Von dem Nabenabschnitt 14 aus erstreckt sich eine Vielzahl von Radialschaufeln bzw. Schaufeln 16 in Axialrichtung, wobei die Schaufeln 16 gleichmäßig in Umfangsrichtung des Nabenabschnitts 14 verteilt sind. Die Schaufeln 16 erstrecken sich von dem Nabenabschnitt 14 aus bis zu einem koaxial, aber axial beabstandet zu dem Nabenabschnitt 14 angeordneten Ringabschnitt 18. Der Nabenabschnitt 14, die Schaufeln 16 und der Ringabschnitt 18 bilden eine käfigartige, werkstoffeinstückige Einheit, die auch Schaufelrad genannt wird.

Die Schaufeln 16 weisen jeweils eine Schaufeleintrittskante 20 auf, die eine radiale Innenkante der Schaufel 16 bzw. der Schaufelfläche bildet. Die Schaufeleintrittskante 20 erstreckt sich vom Nabenabschnitt 14 axial weg und radial nach außen und geht in den Ringabschnitt 18 über. Der Ringabschnitt 18 stabilisiert somit die Schaufeln 16. Der radiale Abstand zwischen der Längsachse der Absaugvorrichtung und den jeweiligen Schaufeleintrittskanten 20 wird somit mit zunehmender Erstreckungslänge von dem Nabenabschnitt 14 aus zu dem Ringabschnitt 18 hin größer.

Radial innerhalb des Ringabschnitts 18 ist ein Spannabschnitt 22 zum Aufnehmen des Schneidwerkzeugs 12 ausgebildet, um den die Schaufeln 16 herum angeordnet sind. Der Spannabschnitt 22 ist koaxial zu dem Ringabschnitt 18 und dem Nabenabschnitt 14 angeordnet. An den Nabenabschnitt 14 schließt sich auf einer ringabschnittabgewandten Seite in Axialrichtung ein Schaftabschnitt 24 an. Der Nabenabschnitt 14, die Schaufeln 16, der Ringabschnitt 18 sowie der Spannabschnitt 22 sind auf den Schaftabschnitt 24 durch 3D-Druck aufgedruckt, so dass sie eine unlösbar miteinander verbundene Einheit bilden.

Der Spannabschnitt 22 weist einen Hydrodehnspannbereich 26 mit zwei Druckkammern 28 auf. Eine erste Druckkammer 28A ist hydraulisch mit einer axial zur ersten Druckkammer 28A versetzt angeordneten, zweiten Druckkammer 28B hydraulisch verbunden. Die Druckkammern 28 können über einen Hydraulikkanal 30 mit Druck beaufschlagt werden, so dass sich eine elastisch nachgiebige Trennwand radial zwischen den Druckkammern 28 und einem Werkzeugaufnahmeabschnitt radial nach innen verformt und somit ein zentriertes Spannen des Schneidwerkzeugs 12 in dem Spannabschnitt 22 erreicht wird. Der Hydraulikkanal 30 ist mit einem Hydraulikanschluss in dem Schaftabschnitt 24 fluidleitend verbunden. Derartige Hydrodehnspannfutter sind an sich bekannt, so dass auf eine Beschreibung der Einzelheiten verzichtet werden kann.

Ein radialer Außendurchmesser des Spannabschnitts 22 verjüngt sich von einem nabenabschnittseitigen Ende des Spannabschnitts 22 zu einem ringabschnittseitigen Ende des Spannabschnitts 22 kontinuierlich. Der Spannabschnitt 22 besitzt also eine konische radiale Außenumfangsfläche. Der Spannabschnitt 22 schließt an dem ringabschnittseitigen Ende des Spannabschnitts 22 axial bündig mit dem Ringabschnitt 18 ab und geht an dem nabenabschnittseitigen Ende des Spannabschnitts 22 in den Nabenabschnitt 14 über.

In einer alternativen Ausführungsform kann die Absaugvorrichtung auch ohne den Spannabschnitt 22 ausgebildet sein, auch wenn dies nicht in den Zeichnungen dargestellt ist.

In Fig. 3 ist ein Querschnitt des Nabenabschnitts 14 dargestellt. Der Nabenabschnitt 14 weist eine Vorwuchtkammer 32 auf, die einen kreisbogenförmigen Querschnitt besitzt. Die Vorwuchtkammer 32 ist über eine sich in Radialrichtung erstreckende Durchgangsöffnung 34 mit einem radialen Außenumfang des Nabenabschnitts 14 verbunden.

In dem Nabenabschnitt 14 sind mehrere C-förmig bzw. kreisbogenförmig ausgebildete Kanäle 36 vorhanden. Dabei ist ein erster Kanal 26A entlang eines zu der Längsachse des Nabenabschnitts 14 konzentrischen ersten Kreises angeordnet. Zwei zweite Kanäle 36B sind entlang eines zu der Längsachse des Nabenabschnitts 14 konzentrischen zweiten Kreises, der einen größeren Durchmesser als der erste Kreis besitzt, angeordnet. Die beiden zweiten Kanäle 36B sind symmetrisch zu einer die Längsachse enthaltenen Symmetrieebene angeordnet. Zwei dritte Kanäle 36C sind entlang eines zu der Längsachse des Nabenabschnitts 14 konzentrischen dritten Kreises, der einen größeren Durchmesser als der zweite Kreis besitzt, angeordnet. Die beiden dritten Kanäle 36C sind symmetrisch zu der Symmetrieebene angeordnet. Die Vorwuchtkammer 32 ist entlang eines zu der Längsachse des Nabenabschnitts 14 konzentrischen Kreises angeordnet, dessen Durchmesser größer als der des zweiten Kreises und kleiner als der des dritten Kreises ist. Die zweiten Kanäle 36B und die dritten Kanäle 36C erstrecken sich jeweils über eine Länge von 1/8 bis 1/4, vorzugsweise etwa 1/6, des Umfangs des zweiten bzw. des dritten Kreises. Der erste Kanal 36A erstreckt sich über eine Länge von 3/4 des Umfangs bis über den gesamten Umfang des ersten Kreises. vorzugsweise über eine Länge von etwa 7/8 des Umfangs des ersten Kreises.

Wie in Fig. 2 zu erkennen ist, erstrecken sich die Kanäle 36 und die Vorwuchtkammer 32 in Axialrichtung bis zu einem schaftseitigen Ende des Nabenabschnitts 14 sowie bis zu einem Ansatz der Schaufeln 16. Dabei verjüngt sich die Breite der Kanäle 36 und der Vorwuchtkammer 32 gemessen in Radialrichtung in Richtung zu den Schaufeln 16 hin.

Die Schaufeln 16 bzw. Längsachsen der Schaufeln 16 sind zu der Axialrichtung der Absaugvorrichtung entlang der Umfangsrichtung geneigt. Die Schaufeln 16 bzw. Längsachsen der Schaufeln 16 sind auch zu der Radialrichtung der Absaugvorrichtung entlang der Axialrichtung geneigt.

Mit anderen Worten verlaufen die Längsachsen der Schaufeln 16 jeweils von einem nabenabschnittseitigen Ende zu einem ringabschnittseitigen Ende gesehen in Radialrichtung von innen nach außen und in Umfangsrichtung in Drehrichtung mitlaufend orientiert. Die Schaufeln 16 sind demnach sowohl in Radialrichtung als auch in Axialrichtung angestellt, wobei sich der Anstellwinkel über die Schaufelerstreckung ändert.

Zwischen jeweils zwei in Umfangsrichtung benachbarten Schaufeln 16 ist ein Schaufelkanal 38 ausgebildet. Die Schaufelkanäle 38 weisen jeweils eine Austrittsöffnung auf, die auf dem radialen Außenumfang des Schaufelrads ausgebildet ist. Die Austrittsöffnungen fallen mit den Auslassöffnungen des Schaufelrads zusammen. Die Schaufeln 16 weisen im Querschnitt eine dreiecksähnliche Form auf, die durch die Schaufeleintrittskanten 20 sowie jeweils zwei auf dem radialen Außenumfang des Schaufelrads liegende Schaufelaustrittskanten 40 gebildet wird. Die Schaufelaustrittskanten 40 entsprechen den Längskanten der Auslassöffnungen des Schaufelrads bzw. der Austrittsöffnungen der Schaufelkanäle 38.

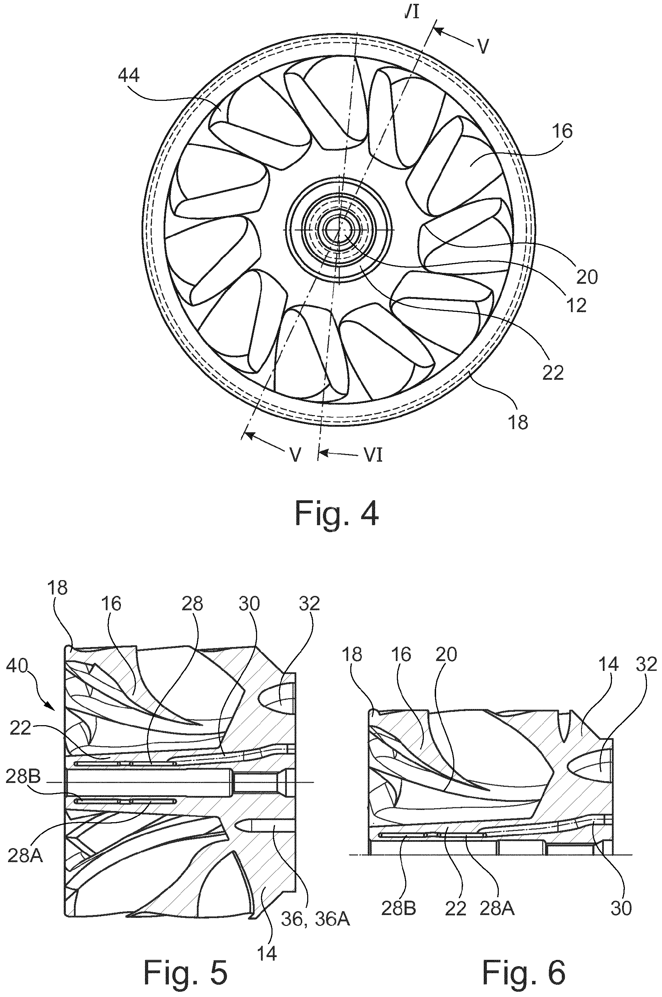

Die Schaufelaustrittskanten 40 sind im Wesentlichen parallel zueinander und sind in Axialrichtung angestellt, so dass eine Länge der Schaufelaustrittskanten 40 größer als die Erstreckungslänge der Schaufeln 16 in Axialrichtung ist. Die Schaufeleintrittskanten 20 erstrecken sich gekrümmt in Axialrichtung von dem Nabenabschnitt 14 weg und nach radial außen, wobei die Krümmung mit zunehmendem Abstand von dem Nabenabschnitt 14 zunimmt, d.h. der Krümmungsradius der Schaufeleintrittskanten 20 nimmt mit zunehmendem Abstand von dem Nabenabschnitt 14 ab (vergleiche Fign. 5 und 6).

An dem werkzeugseitigen Ende des Schaufelrads wird eine durchgehend ringförmige Saugöffnung 42 gebildet, die konzentrisch zu dem Spannabschnitt 22 ist. Dabei wirkt sich eine größere Saugöffnung positiv auf die erzeugbare Saugleistung auf.

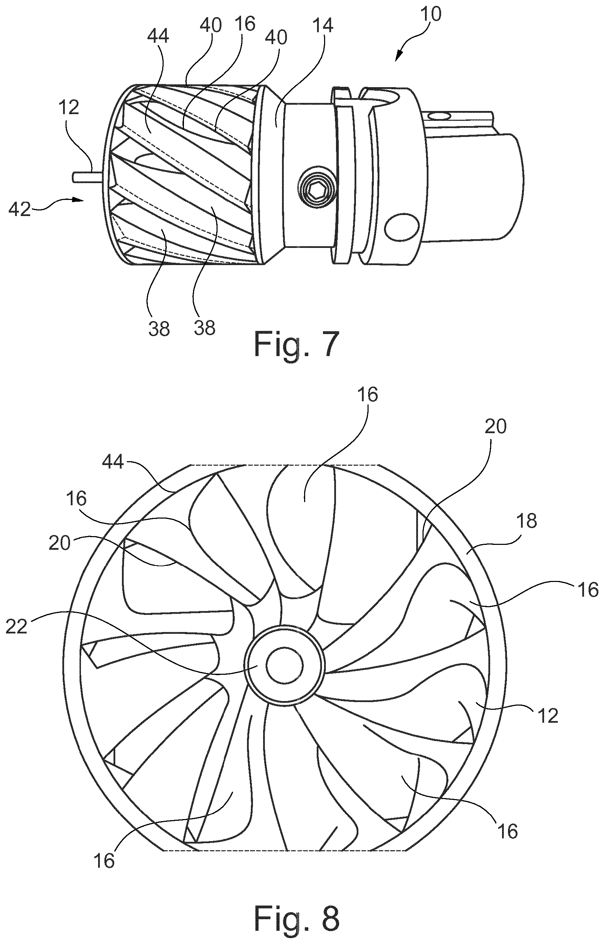

Das Schaufelrad wird integral mit dem Spannabschnitt 22 in einem 3D-DruckVerfahren hergestellt. Dabei werden das Schaufelrad und der Spannabschnitt 22 von einem schaftseitigen Ende aus hergestellt und auf den Schaftabschnitt 24 aufgedruckt, so dass eine unlösbare Einheit aus dem Schaftabschnitt 24, dem Spannabschnitt 22 und dem Schaufelrad gebildet wird. Eine radiale Außenumfangsfläche des Nabenabschnitts 14 geht in eine radiale Außenumfangsfläche des Schaftabschnitts 22 über. Das heißt, es entsteht kein Absatz zwischen dem Schaftabschnitt 24 und dem Schaufelrad. Beim Herstellen werden das Schaufelrad und der Spannabschnitt 22 schichtweise in Axialrichtung aufgetragen. Wegen der Herstellbarkeit ist in einem Übergangsbereich zwischen dem Ringabschnitt 18 und den Schaufeln 16 ein dreiecksähnlicher Abschnitt 44 vorhanden, dessen Außenkanten jeweils einen stumpfen Winkel mit den Schaufeln 16 und dem Ringabschnitt 18 bilden (vergleiche Fign. 7 bis 10).

Die Absaugvorrichtung wird in einem Werkzeugmaschinenbearbeitungsraum eingesetzt, in dem eine Spülströmung, die senkrecht zu der Längsachse der Absaugvorrichtung strömt, erzeugt wird. Die Spülströmung ist so ausgebildet, dass sie in Radialrichtung von der Absaugvorrichtung weg und aus dem Werkzeugmaschinenbearbeitungsraum heraus verläuft.

Durch den oben beschriebenen Aufbau ergibt sich folgende Arbeitsweise: Bei einer Schneidbearbeitung mit dem in dem Spannfutter 10 aufgenommenen Schneidwerkzeug 12 wird der Spannabschnitt 22 in eine Drehrichtung um eine Spindelachse angetrieben. Durch die integrale Ausbildung des Schaufelrads, also des Nabenabschnitts 14, der Schaufeln 16 und den Ringabschnitts 18, mit dem Spannabschnitt 22 wird das Schaufelrad bei der Schneidbearbeitung mitangetrieben. Dabei entsteht durch die Ausgestaltung der Schaufeln 16 eine Saugströmung, die von der werkzeugseitigen, durchgehend ringförmigen Saugöffnung 42 des Schaufelrads durch die Schaufelkanäle 38 zu den Auslassöffnungen auf dem Außenumfang des Schaufelrads strömt. Durch diese Saugströmung werden entstehende Späne sowie Staub von einer zu bearbeitenden Werkstückoberfläche angesaugt und mit der Saugströmung mittransportiert. Die aus den Auslassöffnungen austretenden Späne und/oder der Staub werden dann von der Spülströmung in dem Werkzeugmaschinenbearbeitungsraum erfasst und senkrecht zu der Spindelachse von der Absaugvorrichtung weg und aus dem Werkzeugmaschinenbearbeitungsraum hinaus transportiert.

## Patentansprüche

1. Absaugvorrichtung zum Ansaugen von bei einer Schneidbearbeitung eines Werkstücks entstehenden Spänen und/oder Staub, insbesondere für ein Spannfutter (10) zum Aufnehmen eines drehangetriebenen Schneidwerkzeugs (12), insbesondere eines Schneidwerkzeugs zum Bearbeiten von CFK-Werkstoffen oder anderen kurzspanenden Werkstoffen,
mit einem drehantreibbaren Nabenabschnitt (14), **dadurch gekennzeichnet, dass** die Absaugvorrichtung eine Vielzahl von in Umfangsrichtung gleichmäßig verteilten Radialschaufeln (16) aufweist, die der Nabenabschnitt (14) trägt, wobei sich eine jeweilige Schaufeleintrittskante (20) der Schaufel (16) vom Nabenabschnitt (14) axial weg und radial nach außen bis zu einem die Schaufeln (16) stabilisierenden, zu dem Nabenabschnitt (14) konzentrischen Ringabschnitt (18) erstreckt, wobei die Schaufeln (16) und der Ringabschnitt (18) ein Schaufelrad mit einer werkzeugseitigen, durchgehend ringförmigen Saugöffnung (42) und einer Vielzahl von umfangsseitigen Auslassöffnungen bilden, wobei die Auslassöffnungen auf einem radialen Außenumfang des Schaufelrads ausgebildeten Austrittsöffnungen von Schaufelkanälen (38) entsprechen.

2. Absaugvorrichtung nach Anspruch 1, **dadurch gekennzeichnet, dass** ein Außendurchmesser des Nabenabschnitts (14), des Ringabschnitts (18) und/oder der Schaufeln (16) einen gemeinsamen Hüllzylinder bilden, dessen Mantelfläche die Absaugvorrichtung umschließt.

3. Absaugvorrichtung nach Anspruch 1 oder 2, **dadurch gekennzeichnet, dass** die Schaufeln (16) in Axialrichtung und/oder in Radialrichtung angestellt sind.

4. Absaugvorrichtung nach einem der Ansprüche 1 bis 3, **dadurch gekennzeichnet, dass** die Schaufeln (16) einen kontinuierlich verlaufenden Schaufelquerschnitt über mehr als die Hälfte der Erstreckungslänge der Absaugvorrichtung entlang ihrer Längsachse besitzen.

5. Absaugvorrichtung nach einem der Ansprüche 1 bis 4, **dadurch gekennzeichnet, dass** die Absaugvorrichtung in sich integral ausgebildet ist.

6. Absaugvorrichtung nach einem der Ansprüche 1 bis 5, **dadurch gekennzeichnet, dass** die Absaugvorrichtung generativ gefertigt ist.

7. Absaugvorrichtung nach einem der Ansprüche 1 bis 6, **dadurch gekennzeichnet, dass** der Nabenabschnitt (14) integral mit einem Spannabschnitt (22) des Spannfutters (10) ausgebildet ist.

8. Absaugvorrichtung nach Anspruch 7, **dadurch gekennzeichnet, dass** der Spannabschnitt (22) axial bündig mit dem Ringabschnitt (18) abschließt.

9. Absaugvorrichtung nach Anspruch 7 oder 8, **dadurch gekennzeichnet, dass** der Spannabschnitt (22) einen Hydrodehnspannbereich oder einen Spannzangenmechanismus aufweist.

10. Absaugvorrichtung nach einem der Ansprüche 3 bis 9, **dadurch gekennzeichnet, dass** sich der Anstellwinkel der Schaufeln (16) in radialer und/oder axialer Richtung über die Schaufelerstreckung ändert.

11. Verfahren zur Herstellung einer Absaugvorrichtung nach einem der Ansprüche 1 bis 10 mit den Schritten:
- Bestimmen einer für den Absaugvorgang von einem Eingriffsbereich eines Schneidwerkzeugs (12) erforderlichen Saugleistung hinsichtlich Geschwindigkeit und Volumen;
- Erstellen eines Berechnungsmodells für die Gestaltung einer Vielzahl von Schaufeln (16) der Absaugvorrichtung;
- Optimieren der Schaufelgestaltung in dem Berechnungsmodell hinsichtlich einer erzeugten Saugleistung;
- Additives Fertigen des Berechnungsmodells.

## Claims

1. A suction device for sucking chips and/or dust generated during a cutting machining of a workpiece, in particular for a chuck (10) for receiving a rotationally driven cutting tool (12), especially a cutting tool for machining CFRP materials or other short-chipping materials,
comprising a hub portion (14) that can be rotationally driven, **characterized in that** the suction device comprises a plurality of radial blades (16) evenly distributed in a circumferential direction and supported by the hub portion (14), wherein in each case a blade entering edge (10) of the blade (16) extends axially away from the hub portion (14) and radially outwards to a ring portion (18) that stabilizes the blades (16) and is concentric with respect to the hub portion (14), wherein the blades (16) and the annular portion (18) form a blade wheel with a continuous annular suction opening (42) on the tool side and a plurality of outlet openings on the circumferential side, wherein the outlet openings correspond to outlet openings of blade channels (38) formed on an outer radial circumference of the blade wheel.

2. The suction device according to claim 1, **characterized in that** an outer diameter of the hub portion (14), the ring portion (18) and/or the blades (16) form a joint casing cylinder the outer surface of which encloses the suction device.

3. The suction device according to claim 1 or 2, **characterized in that** the blades (16) are inclined in the axial direction and/or in the radial direction.

4. The suction device according to any one of the claims 1 to 3, **characterized in that** the blades (16) have a continuously extending blade cross-section over more than half the extension length of the suction device along its longitudinal axis.

5. The suction device according to any one of the claims 1 to 4, **characterized in that** the suction device is formed integrally in itself.

6. The suction device according to any one of the claims 1 to 5, **characterized in that** the suction device is generatively produced.

7. The suction device according to any one of the claims 1 to 6, **characterized in that** the hub portion (14) is formed integrally with a chuck portion (22) of the chuck (10).

8. The suction device according to claim 7, **characterized in that** the chuck portion (22) is axially flush with the ring portion (18).

9. The suction device according to claim 7 or 8, **characterized in that** the chuck portion (22) includes a hydraulic chuck area or a collet chuck mechanism.

10. The suction device according to any one of the claims 3 to 9, **characterized in that** the angle of attack of the blades (16) in the radial and/or axial direction varies along the blade extension.

11. A method for producing a suction device according to any one of the claims 1 to 10 comprising the steps of:
- determining a suction power in terms of speed and volume required for the sucking operation from an engaging area of a cutting tool (12);
- establishing a calculation model for the configuration of a plurality of blades (16) of the suction device;
- optimizing the blade configuration in the calculation model with respect to a suction power produced;
- additively producing the calculation model.

## Revendications

1. Dispositif d'aspiration pour l'aspiration de copeaux et/ou de poussière produits lors d'un usinage de coupe d'une pièce à usiner, en particulier pour un mandrin de serrage (10) destiné à loger un outil de coupe (12) entraîné en rotation, en particulier d'un outil de coupe destiné à usiner des matériaux plastiques renforcés par des fibres de carbone ou autres matériaux générant des copeaux courts,
avec une section de moyeu (14) entraînable en rotation, **caractérisé en ce que** le dispositif d'aspiration présente une pluralité d'aubes radiales (16) réparties uniformément dans le sens périphérique que porte la section de moyeu (14), dans lequel une arête d'entrée d'aube (20) respective de l'aube (16) s'étend depuis la section de moyeu (14) axialement et radialement vers l'extérieur jusqu'à une section annulaire (18) concentrique par rapport à la section de moyeu (14), stabilisant les aubes (16), dans lequel les aubes (16) et la section annulaire (18) forment une roue d'aube avec une ouverture d'aspiration (42) côté outil, annulaire en continu et une pluralité d'ouvertures de sortie côté périphérie, dans lequel les ouvertures de sortie correspondent à des ouvertures de sortie de canaux d'aube (38) formées sur une périphérie extérieure radiale de la roue d'aube.

2. Dispositif d'aspiration selon la revendication 1, **caractérisé en ce qu'**un diamètre extérieur de la section de moyeu (14), de la section annulaire (18) et/ou des aubes (16) forment un cylindre d'enveloppe commun, dont la surface enveloppe entoure le dispositif d'aspiration.

3. Dispositif d'aspiration selon la revendication 1 ou 2, **caractérisé en ce que** les aubes (16) sont mises en place dans le sens axial et/ou dans le sens radial.

4. Dispositif d'aspiration selon l'une quelconque des revendications 1 à 3, **caractérisé en ce que** les aubes (16) possèdent une section transversale d'aube s'étendant en continu sur plus de la moitié de la longueur d'étendue du dispositif d'aspiration le long de son axe longitudinal.

5. Dispositif d'aspiration selon l'une quelconque des revendications 1 à 4, **caractérisé en ce que** le dispositif d'aspiration est formé d'un seul tenant en soi.

6. Dispositif d'aspiration selon l'une quelconque des revendications 1 à 5, **caractérisé en ce que** le dispositif d'aspiration est fabriqué de manière générative.

7. Dispositif d'aspiration selon l'une quelconque des revendications 1 à 6, **caractérisé en ce que** la section de moyeu (14) est formée d'un seul tenant avec une section de serrage (22) du mandrin de serrage (10).

8. Dispositif d'aspiration selon la revendication 7, **caractérisé en ce que** la section de serrage (22) se termine axialement à fleur avec la section annulaire (18).

9. Dispositif d'aspiration selon la revendication 7 ou 8, **caractérisé en ce que** la section de serrage (22) présente une zone d'hydroexpansion ou un mécanisme à pince de serrage.

10. Dispositif d'aspiration selon l'une quelconque des revendications 3 à 9, **caractérisé en ce que** l'angle d'attaque des aubes (16) se modifie dans le sens radial et/ou axial sur l'étendue d'aube.

11. Procédé de fabrication d'un dispositif d'aspiration selon l'une quelconque des revendications 1 à 10 présentant les étapes suivantes :
- la détermination d'une puissance d'aspiration nécessaire au processus d'aspiration d'une zone d'engagement d'un outil de coupe (12) en ce qui concerne la vitesse et le volume ;
- la création d'un modèle de calcul pour la conception d'une pluralité d'aubes (16) du dispositif d'aspiration ;
- l'optimisation de la conception d'aube dans le modèle de calcul en ce qui concerne une puissance d'aspiration générée ;
- la fabrication additive du modèle de calcul.
